Europäisches Patentamt

European Patent Office

Office européen des brevets

(11) Veröffentlichungsnummer: **0 392 577**

**A1**

(12) **EUROPÄISCHE PATENTANMELDUNG**

(21) Anmeldenummer: **90200661.8**

(22) Anmeldetag: **21.03.90**

(51) Int. Cl.⁵: **C10J 3/42, C10J 3/34, C10J 3/02**

(30) Priorität: **11.04.89 DE 3911752**

(43) Veröffentlichungstag der Anmeldung:
**17.10.90 Patentblatt 90/42**

(84) Benannte Vertragsstaaten:
**DE ES SE**

(71) Anmelder: **METALLGESELLSCHAFT Aktiengesellschaft**
**Reuterweg 14**
**D-6000 Frankfurt am Main(DE)**

(72) Erfinder: **Mielke, Horst**
**Bansa Strasse 5 a**
**D-6078 Neu-Isenburg(DE)**
Erfinder: **Schmitt, Gerhard**
**Weihergrundstrasse 20**
**D-6384 Schmitten(DE)**
Erfinder: **Herbert, Peter, Dr.**
**Frauensteinplatz 15**
**D-6000 Frankfurt am Main 1(DE)**

(54) **Vorrichtung zum Entspannen einer Aschenschleuse.**

(57) Der Schleusenbehälter ist mit einem der Vergasung oder Verbrennung fester Brennstoffe dienenden Reaktor verbunden und dient zum Abführen von Asche aus dem Reaktor. Im Reaktor herrscht ein Druck von mindestens 2 bar. Der Schleusenbehälter wird abwechselnd bespannt und entspannt. Die Entspannungsleitung ist mit einem gasdurchlässigen, für Feststoffe weitgehend undurchlässigen Filterelement verbunden, das sich innerhalb des Schleusenbehälters befindet. Beim üblichen Füllstand des Schleusenbehälters während der Entspannung ist das Filterelement mindestens zur Hälfte von Asche umgeben. Das Filterelement kann rohrförmig ausgebildet sein.

## Vorrichtung zum Entspannen einer Aschenschleuse

Die Erfindung betrifft einen Schleusenbehälter, der mit einem unter einem Druck von mindestens 2 bar arbeitenden, der Vergasung oder Verbrennung fester Brennstoffe dienenden Reaktor verbunden ist und zum Abführen von Asche aus dem Reaktor dient, wobei der Schleusenbehälter bespannt und über eine Entspannungsleitung entspannt wird. Mit Asche sind allgemein Feststoffrückstände gemeint, die auch noch Kohlenstoff enthalten können.

Ein solcher Schleusenbehälter ist bekannt und z.B. in der deutschen Offenlegungsschrift 33 33 870 und im dazu korrespondierenden US-Patent 4 608 059 beschrieben. Wenn der Schleusenbehälter aus dem Reaktor Asche aufgenommen hat und dann vor der Entleerung entspannt werden muß, werden mit dem Entspannungsgas erhebliche Mengen an feiner Asche mitgerissen. Baut man in die Entspannungsleitung ein Filter ein, so wird dieses Filter durch die Feststoffe schnell zugesetzt und muß häufig rückgespült oder ausgewechselt werden.

Der Erfindung liegt die Aufgabe zugrunde, dafür zu sorgen, daß das Entspannungsgas über eine möglichst lange Betriebszeit ungehindert den Schleusenbehälter verlassen kann und möglichst wenig Wartungsarbeit für das Filter notwendig wird. Erfindungsgemäß gelingt dies dadurch, daß die Entspannungsleitung mit einem gasdurchlässigen, für Feststoffe weitgehend undurchlässigen Filterelement verbunden · ist, das sich innerhalb des Schleusenbehälters befindet und beim üblichen Füllstand des Schleusenbehälters beim Entspannen mindestens zur Hälfte von Asche umgeben ist. Hierbei kann der Bereich des Filterelements, der während der Entspannung von der Ascheschüttung umgeben ist, mit feinteiliger Asche nicht oder kaum zugesetzt werden, da auch feinteilige Asche innerhalb der Schüttung durch die

Gasströmung nicht oder kaum bewegt wird. Für diese verringerte Beweglichkeit der feinkörnigen Asche sorgt der grobkörnige Anteil der Asche.

Das Filterelement kann auf verschiedenartige Weise geformt sein. Es ist zweckmäßig, das Filterelement rohrförmig auszubilden, damit es bei großer Oberfläche durch eine kleine Öffnung im Schleusenbehälter herausgezogen und eingeführt werden kann.

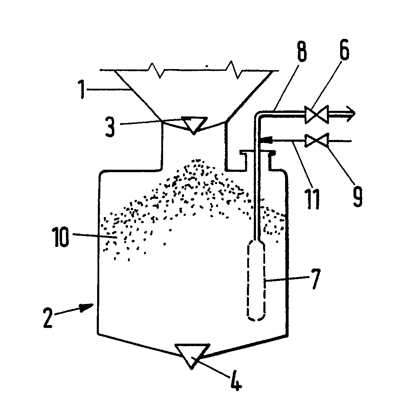

Einzelheiten des Schleusenbehälters werden mit Hilfe der Zeichnung erläutert, sie zeigt in schematischer Darstellung einen Längsschnitt durch den Behälter.

Feste Brennstoffe werden in einem Reaktor (1) unter einem Druck von mindestens 2 bar vergast oder verbrannt. Vom Reaktor (1) ist nur der unterste Bereich dargestellt, an den sich der Schleusenbehälter (2) anschließt. Zwischen dem Reaktor (1) und dem Behälter (2) ist ein Verschluß (3) angeordnet, der, wenn er geöffnet ist, Asche aus dem Reaktor (1) in den Behälter (2) fließen läßt. Der Auslaß des Schleusenbehälters weist ebenfalls eine Verschlußvorrichtung (4) auf.

In der Zeichnung ist der Schleusenbehälter im Zustand kurz vor oder während der Entspannung dargestellt. Zum Entspannen wird das Ventil (6) geöffnet, damit Gase aus dem Behälter durch das Filterelement (7) und die Entspannungsleitung (8) austreten können. Das Ventil (9) ist geschlossen. Dadurch, daß das Filterelement von der Ascheschüttung (10) ganz umschlossen ist, werden feine Aschepartikel durch die groberen Aschekörner daran gehindert, sich mit dem Entspannungsgas frei zu bewegen und die Poren des Filterelements (7) zuzusetzen. Um diesen vorteilhaften Effekt mindestens teilweise zu erreichen, empfiehlt es sich, das Filterelement (7) so auszubilden und anzuordnen, daß mindestens die Hälfte seiner porösen Oberfläche von der Ascheschüttung umgeben ist, vorzugsweise sitzt das Filterelement aber ganz oder weitgehend in der Ascheschüttung.

Nach der Entspannung des Schleusenbehälters (2) auf Atmosphärendruck wird die Verschlußvorrichtung (4) geöffnet, so daß die Asche abfließen kann. Vorsorglich ist die Entspannungsleitung (8) mit einer Leitung (11) verbunden, durch welche man über das geöffnete Ventil (9) Wasserdampf oder Rückspülgas in das Filterelement (7) einleiten · kann, um dessen Poren von innen nach außen freizuspülen. Dies ist aber nur selten notwendig. Um die Häufigkeit von Rückspülungen noch weiter zu verringern, empfiehlt es sich, an die Entspannungsleitung mehrere Filterelemente anzuschließen. Die Filterelemente bestehen z.B. aus Siliziumcarbid oder hitzebeständigen Mineralfaserstoffen, anorganischen Fasern, keramischen Fasern oder Verbundwerkstoffen.

## Ansprüche

1. Schleusenbehälter, der mit einem unter einem Druck von mindestens 2 bar arbeitenden, der Vergasung oder Verbrennung fester Brennstoffe dienenden Reaktor verbunden ist und zum Abführen von Asche aus dem Reaktor dient, wobei der Schleusenbehälter bespannt und über eine Entspannungsleitung entspannt wird, dadurch gekennzeichnet, daß die Entspannungsleitung mit einem gasdurchlässigen, für Feststoffe weitgehend undurchlässigen Filterelement verbunden ist, das sich innerhalb des Schleusenbehälters befindet und beim üblichen Füllstand des Schleusenbehälters beim Entspannen mindestens zur Hälfte von Asche umgeben ist.

2. Schleusenbehälter nach Anspruch 1, dadurch gekennzeichnet, daß das Filterelement rohrförmig ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 412 930 (STEINMÜLLER) <br> * Patentansprüche 1-7; Seiten 1-2; Figur 3 * <br> --- | 1,2 | C 10 J 3/42 <br> C 10 J 3/34 <br> C 10 J 3/02 |
| A | US-A-3 410 791 (PERRY) <br> * Spalte 3, Zeile 17 - Spalte 5, Zeile 8 * <br> --- | 1 | |
| A | DE-C- 957 297 (METALLGESELLSCHAFT) <br> ----- | | |

**RECHERCHIERTE SACHGEBIETE (Int. Cl.5)**

C 10 J
B 01 J

Der vorliegende Recherchenbericht wurde für alle Patentansprüche erstellt

| Recherchenort | Abschlußdatum der Recherche | Prüfer |
|---|---|---|
| DEN HAAG | 26-06-1990 | WENDLING J.P. |